# EUROPÄISCHE PATENTSCHRIFT

(11) **EP 2 060 444 B1**
(45) Veröffentlichungstag und Bekanntmachung des Hinweises auf die Patenterteilung: **04.11.2009**
(21) Anmeldenummer: 07022185.8
(22) Anmeldetag: 15.11.2007
(51) Int. Cl.: B60R 13/02, B60Q 3/00, B60Q 3/02, B60Q 3/04, G09F 13/22, F21K 2/00, H05B 35/00

(54) **Leuchtendes Formteil, ausgebildet als Verkleidungsteil für den Fahrzeuginnenraum**
Luminescent moulded part, formed as trim for the interior of a vehicle
Pièce moulée d'éclairage, en forme de pièce de revêtement de l'habitacle du véhicule

(43) Veröffentlichungstag der Anmeldung: 20.05.2009
(73) Patentinhaber: Novem Car Interior Design GmbH, 95519 Vorbach (DE)
(72) Erfinder: Egerer, Gerhard, 92724 Trabitz (DE); Wagner, Michael, 96149 Breitengüßbach (DE); Abach, Andreas, 90419 Nürnberg (DE)
(74) Vertreter: Schlögl, Markus

(56) Entgegenhaltungen:
- EP-A- 0 072 963
- EP-A- 1 705 626
- DE-A1- 10 248 897
- FR-A- 2 054 877
- US-B1- 7 276 854

## Beschreibung

Die Erfindung betrifft ein Formteil, ausgebildet als ein Verkleidungsteil für einen Fahrzeuginnenraum.

Die Formteile umfassen üblicherweise einen Träger, beispielsweise aus Kunststoff, und eine Dekorschicht. Die Dekorschicht kann sich über das gesamte Formteil erstrecken, es ist aber ebenso möglich, dass sie nur einem Teilbereich des Formteils zugeordnet ist.

Bei Nachfahrten wirken die Dekor- und Verkleidungsteile im Fahrzeuginnenraum dunkel. Beleuchtet sind nur die Anzeigen und Schaltelemente am Armaturenbrett bzw. Anzeigen und Schaltelemente, die in die Verkleidungs-bzw. Dekorteile integriert sind. Die Innenraumbeleuchtung des Fahrzeugs ist zwar in der Lage, die Verkleidungs- bzw. Dekorteile anzustrahlen und damit sichtbar zu machen. Jedoch ist diese Lichtquelle üblicherweise beim Fahren ausgeschaltet, da sie bei Dunkelheit aufgrund ihrer Helligkeit die Sicht des Fahrers, insbesondere bei Dunkelheit, behindert.

Die bei Dunkelheit auftretenden dunklen Fahrzeuginnenflächen und der dunkle Fahrzeuginnenraum insgesamt werden von den Fahrzeuginsassen oftmals als unangenehm empfunden. Gewünscht wird eine Grundhelligkeit im Fahrzeuginnenraum, die die Dekore der Formteile und damit die Ausgestaltung des Innenraums erkennbar macht, ohne den Fahrer bei Nachtfahrten durch zu große Helligkeit und/oder Blendungen in seiner Sicht einzuschränken.

Als Stand der Technik wird auf die gattungsbildende FR-A-2 054 877 und die DE 102 48 897 A1, US-B1-7 276 854 und EP-A-0 072 963 verwiesen.

Es ist Aufgabe der Erfindung, ein als Verkleidungsteil ausgebildetes Formteil für den Fahrzeuginnenraum, anzugeben, mit dem sich die vorgenannten Nachteile überwinden lassen.

Diese Aufgabe wird gelöst durch die Merkmale des Anspruchs 1. Vorteilhafte Ausgestaltungen und Weiterbildungen sind in den von Anspruch 1 abhängigen Ansprüchen angegeben.

Bei dem erfindungsgemäßen Formteil handelt es sich um ein Formteil, das unter gewissen Voraussetzungen Licht im sichtbaren Bereich aussendet.

Das Formteil umfasst hierzu mindestens eine Anregungsquelle zur Aussendung elektromagnetischer Wellen und mindestens ein lumineszierendes Material (konkret ein photolumineszierendes Material), das durch die von der oder den Anregungsquellen ausgehenden elektromagnetischen Wellen zur Aussendung von Licht im sichtbaren Bereich anregbar oder angeregt ist.

Das Formteil umfasst wie die bekannten Formteile mindestens eine Dekorschicht und mindestens einen Träger, beispielsweise einen Kunststoffträger.

Bei diesem Formteil handelt es sich insbesondere um ein Dekor- und/oder Verkleidungsteil für einen Fahrzeuginnenraum.

Ferner sind am oder im Träger zusätzlich Farbstoffe vorgesehen, die dem vom lumineszierenden Material ausgesandten oder auszusendenden Licht im sichtbaren Bereich einen bestimmten Farbton geben. Diese Farbstoffe können in den Träger eingebaut oder integriert sein und/oder mit dem den Träger bildenden Material vermischt oder vermengt sein.

Über die Anregungsquelle kann das lumineszierende Material gezielt zum Leuchten gebracht werden. Auf diese Weise kann das Formteil in einer vorgegebenen Weise leuchten, seine dekorative Wirkung kommt auch bei Dunkelheit zur Geltung.

Diese leuchtenden Formteile ermöglichen neuartige Akzente bei der Fahrzeuginnenraumgestaltung. Insbesondere beim Nachtdesign lassen sich bisher unbekannte Effekte und Wirkungen umsetzen.

Von besonderem Vorteil ist, dass die erfindungsgemäßen Formteile derart ausgebildet sein können, dass sie flächig leuchten. Einzelne helle Leuchtquellen sind nicht erforderlich. Dadurch werden Blendeffekte vermieden, mit den Formteilen lässt sich eine einheitliche, für die Fahrzeuginsassen blendfreie und störungsfreie Hintergrundbeleuchtung erzeugen.

Die Aktivierung des lumineszierenden Materials und damit der Beleuchtung durch Aktivierung der Anregungsquellen ermöglicht eine gezielte Steuerung der Beleuchtung. Die Fahrzeuginsassen können damit das Leuchten der Formteile und damit die Innenraumbeleuchtung an ihre Wünsche anpassen.

Insgesamt eröffnet die Erfindung somit völlig neuartige Beleuchtungsmöglichkeiten für den Fahrzeuginnenraum.

Unter Lumineszenz wird das Phänomen verstanden, bei welchem ein lumineszierendes Material eine Energie absorbiert und als elektromagnetische Strahlung wieder abgibt. Die Photolumineszenz ist die bekannteste Lumineszenzart, bei der das lumineszierende Material die Energie der Photonen einer anregenden elektromagnetischen Welle (häufig der des Ultravioletten Lichts) absorbiert und als elektromagnetische Strahlung, insbesondere als sichtbares Licht (Strahlung im sichtbaren Farbspektrum des Lichtes), wieder abgibt. Die Lumineszenz wird auch als kaltes Leuchten bezeichnet, da die Lumineszenz im Unterschied zu herkömmlichem Leuchten keine Wärme erfordert.

Grundsätzlich werden zwei Formen der Photolumineszenz nach der Langlebigkeit der Lumineszenzrückstrahlung unterschieden: Erfolgt eine sofortige Abstrahlung der absorbierten Energie (Abstrahlung innerhalb von 10⁻⁴ s), dann spricht man von Fluoreszenz. Benötigt die Abstrahlung länger, spricht man von Phosphoreszenz. Phosphoreszierende Materialien können sogar eine Nachstrahlung von bis zu mehreren Stunden aufweisen. Mit anderen Worten: Fluoreszenz bedeutet: Anregung aus = Leuchten aus; Phosphoreszenz bedeutet: Anregung aus, Nachleuchten ohne Anregung für gewisse Zeit, einige Minuten oder gar Stunden.

Gemäß einer Weiterbildung der Erfindung ist das lumineszierende Material ein fluoreszierendes Material. Dies hat den Vorteil einer exakten Steuerbarkeit über die Anregungsquellen. Sind die Anregungsquellen aktiv, leuchtet das lumineszierende Material. Werden die Anregungsquellen ausgeschaltet, erlischt auch das Leuchten des fluoreszierenden Materials.

Es kann aber auch vorgesehen sein, dass das lumineszierende Material ein phosphoreszierendes Material ist. In diesem Fall lässt sich das Nachleuchten nach dem Ausschalten der Anregungsquellen für spezielle Effekte nutzen, beispielsweise für ein langsames, gewissermaßen gedimmtes Erlöschen des Leuchtens. Das Nachleuchten des phosphoreszierenden Materials ist zeitlich begrenzt, üblicherweise einige Minuten bis hin zu Stunden, es kann nicht vorzeitig abgebrochen werden. Auch Mischformen aus fluoreszierendem und phosphoreszierendem Material sind möglich.

Fluoreszierende Materialien, die für eine Verwendung in den Formteilen in Betracht kommen, sind beispielsweise die Farbstoffe Uranin, Rhodamine, Fluorescein, DAPI, Cumarine, Allophycocyanin, Indocyaningrün/ICG, Chinin-Hydrogensulfat, GFP (Green Fluorescent Protein), Quadraine (Quadratsäurefarbstoffe) auf Basis von N,N-Dialkylanilinen, und 1,3,2-Dioxaborine (Komplexe von Borsäurederivaten mit 1,3-Dicarbonylverbindungen).

Phosphoreszierende Materialien, die für einen Verwendung in den Formteilen in Betracht kommen, sind insbesondere Kristalle mit einer geringen Beimischung eines Fremdstoffes, der die Gitterstruktur des Kristalls stört, beispielsweise Sulfide von Metallen der zweiten Gruppe sowie Zink, denen geringe Mengen von Schwermetallsalzen beigemischt sind, z.B. Zinksulfid mit Spuren von Schwermetallsalzen. Als weiteres Beispiel seien Erdalkalialuminat-Kristalle genannt.

Lumineszierende Materialien kommen typischerweise in Mineralien vor. Für die Anwendung können die lumineszierenden Materialien in spezielle Kunststoffe integriert sein.

Bei den in den Formteilen eingesetzten lumineszierenden Materialien kann es sich somit gemäß einer Ausführungsvariante um lumineszierende Mineralien und/oder lumineszierende Farbstoffe handeln.

Eine wichtige Eigenschaft der lumineszierenden Materialien, und zwar sowohl der fluoreszierenden als auch der phosphoreszierenden Materialien, ist, dass das jeweilige Leuchtphänomen uneingeschränkt wiederholbar ist, d.h. die Materialien verbrauchen sich nicht. Dies sichert die Einsatzfähigkeit über die Lebensdauer eines Kraftfahrzeugs hinweg. Die lumineszierenden Materialien müssen nicht ausgetauscht, erneuert oder gewartet werden.

Gemäß einer bevorzugten Weiterbildung der Erfindung handelt es sich bei den von der Anregungsquelle ausgehenden elektromagnetischen Wellen um eine Strahlung im nichtsichtbaren Bereich sind, insbesondere eine UV-Strahlung.

Besonders zweckmäßig ist eine Weiterbildung, bei der die Anregungsquelle eine UV-Lichtquelle, insbesondere eine UV-Lampe oder eine UV-LED oder ein UV-LED-Strip (Streifen) oder eine UV-Elektrolumineszenz-Folie, ist oder umfasst.

Die Anregungsquelle kann auch ein Lichtleiter sein, der die anregende Welle ausgehend von einer Lichtquelle, beispielsweise einer UV-Lichtquelle, im Träger verteilt.

Die Anregungsquelle oder die Anregungsquellen sind in einer Ausführungsvariante der Erfindung an und/oder in dem Träger angeordnet. Sie können auch mit Abstand vom Träger angeordnet sein, beispielsweise auf der der Dekorschicht abgewandten Seite des Trägers.

Gemäß einer Weiterbildung ist das lumineszierende Material an und/oder in dem Träger vorgesehen. Somit wird die Dekorschicht vom Träger her und somit von hinten beleuchtet. Das Licht scheint durch die dünne Dekorschicht hindurch, so dass das Formteil insgesamt leuchtet. Das Dekor wird damit auch bei Dunkelheit sichtbar. Alternativ oder additiv ist es auch möglich, dass das luminesziernde Material an und/oder in der Dekorschicht vorgesehen ist, insbesondere an und/oder in der Sichtseite abgewandten Bereichen der Dekorschicht.

Gemäß einer Weiterbildung ist das lumineszierende Material als Schicht auf den Träger angeordnet bzw. aufgebracht, beispielsweise direkt auf dem Träger (und zwar sowohl auf der der Dekorschicht zugewandten Seite als auch auf der der Dekorschicht abgewandten Seite, ebenso auf beiden Seiten) oder zunächst auf der Rückseite der Dekorschicht, die dann auf dem Träger angeordnet wird.

Das lumineszierende Material kann alternativ oder additiv auch in den Träger integriert oder eingebaut sein, insbesondere bereits bei der Ausbildung des Trägers in das den Träger bildende Material integriert oder eingebaut werden und/oder mit dem den Träger bildenden Material vermischt oder vermengt werden. Bei Integration bzw. Einbau liegt damit gewissermaßen ein Blend aus normalem Trägermaterial und lumineszierendem Material vor.

Bei Anordnung als Schicht auf dem Träger kann die Schicht den Träger gleichmäßig bedecken, so dass bei einheitlicher Anregung ein gleichmäßiges Leuchten hervorgerufen wird. Es können aber auch nur Teilbereiche des Trägers von der Schicht überdeckt werden, so dass ein strukturiertes Leuchten hervorgerufen wird. Auch kann die Verteilungsdichte des lumineszierenden Materials in der Schicht kontinuierlich sein zur Erzeugung eines gleichmäßigen Leuchtens, es kann aber auch eine diskontinuierliche Verteilungsdichte vorgesehen werden, d.h. Teilbereiche mit mehr lumineszierenden Pigmenten und Teilbereiche mit weniger lumineszierenden Pigmenten, wodurch wiederum ein inhomogenes, strukturiertes Leuchten hervorgerufen wird.

Auch bei Einbau bzw. Integration des lumineszierenden Materials in den Träger kann der gesamte Träger einheitlich mit dem lumineszierenden Material versehen sein, so dass bei einheitlicher Anregung ein gleichmäßiges Leuchten hervorgerufen wird. Das lumineszierenden Material kann aber auch nur in Teilbereiche des Trägers integriert bzw. eingebaut sein, so dass ein strukturiertes Leuchten hervorgerufen wird. Auch kann die Verteilungsdichte des lumineszierenden Materials im Träger kontinuierlich sein zur Erzeugung eines gleichmäßigen Leuchtens, es kann aber auch eine diskontinuierliche Verteilungsdichte vorgesehen werden, d.h. Teilbereiche mit mehr lumineszierenden Pigmenten und Teilbereiche mit weniger lumineszierenden Pigmenten, wodurch wiederum ein inhomogenes, strukturiertes Leuchten hervorgerufen wird.

Vergleichbares gilt auch für die Anordnung der Anregungsquellen. Diese können prinzipiell an der der Dekorschicht abgewandten Rückseite des Trägers vorgesehen sein (an den Träger angrenzend oder mit Abstand zum Träger) und/oder in Ausnehmungen in dem Träger. Prinzipiell können sie auch zwischen Dekorschicht und Träger am Träger angeordnet sein. Die Verteilung der Anregungsquellen wirkt sich auf das Leuchten des lumineszierenden Materials aus. Eine kontinuierliche Verteilung ermöglicht ein flächig einheitlich starkes Leuchten. Eine diskontinuierliche Verteilung ermöglicht, auch bei homogener Verteilung des lumineszierenden Materials in bzw. am Träger, ein entsprechend strukturiertes Leuchten.

Ein flächig homogenes Leuchten bzw. ein strukturiertes Leuchten lässt sich auch über das gezielte Ansteuern der Anregungsquellen hervorrufen. Senden die Anregungsquellen Anregungswellen hoher Intensität aus, ist auch das hervorgerufene Leuchten stärker, als bei Anregungswellen geringer Intensität. Werden die Anregungsquellen (gegebenenfalls auch homogen verteilte Anregungsquellen) unterschiedlich stark angesteuert und damit aktiviert, lässt sich ein entsprechend strukturiertes Leuchten des lumineszierenden Materials hervorrufen.

Eine Weiterbildung des erfindungsgemäßen Formteils sieht vor, dass der Träger ganz oder zumindest abschnittsweise für die von der Anregungsquelle ausgehenden anregenden Wellen und/oder das vom lumineszierenden Material ausgesandte oder auszusendende Licht zumindest teilsweise transparent oder durchscheinend ausgebildet ist. Insbesondere kann der Träger ein für die von der Anregungsquelle ausgehende anregende Wellen und/oder das vom lumineszierenden Material ausgesandte oder auszusendende Licht zumindest teilweise transparenter oder durchscheinender Kunststoff sein oder einen derartigen Kunststoff umfassen. Vorzugsweise handelt es sich hierbei um einen Thermoplast oder einen Elastomer oder einen Duroplast.

Die Dekorschicht kommen grundsätzlich alle bekannten Dekorschichten in Betracht. Beispielsweise kann die Dekorschicht eine Dekorlage, insbesondere ein Holzfurnier und/oder eine Metalllage und/oder eine Folie, vorzugsweise eine Kunststoff- und/oder Metallfolie, und/oder eine Textillage und/oder ein Stoff, umfassen. Die Stärke der Dekorschicht sollte derart gewählt werden, dass die jeweilige Lumineszenzstrahlung den gewünschten Beleuchtungseffekt hervorruft, insbesondere ein ausreichend helles Leuchten des Dekors hervorrufen kann. Je dünner die Dekorschicht bzw. die Dekorlage, desto stärker ist das erzeugbare Dekorleuchten.

Die Anregungsquelle kann elektrisch mit einer Steuereinrichtung zur elektrischen Ansteuerung der Anregungsquelle verbunden sein. Insbesondere kann sie über das Bordnetz des Fahrzeugs an die Spannungsquelle des Fahrzeugs angeschlossen sein. Die Steuereinrichtung kann dazu ausgebildet sein, mehrere oder alle Anregungsquellen einheitlich zu aktivieren bzw. zu deaktivieren. Sie kann auch dazu ausgebildet sein, die Stärke der Aktivierung einzustellen, so dass sich die Stärke des hervorgerufenen Leuchtens des lumineszierenden Materials einstellen lässt. Es ist auch möglich, dass in unterschiedlichen Bereichen des Formteils angeordnete Anregungsquellen getrennt voneinander angesteuert werden, auch die getrennte Ansteuerung einzelner Anregungsquellen ist möglich. Dadurch lassen sich entsprechend strukturierte Leuchteffekte hervorrufen bzw. die Innenraumbeleuchtung ist hinsichtlich ihrer Stärke und räumlichen Verteilung an individuelle Wünsche anpassbar. Es können auch spezielle Beleuchtungseinstellungen in der Steuereinheit hinterlegt und bei Bedarf abgerufen werden.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Dabei zeigen
- FIG 1: in einer schematischen Querschnittsdarstellung ein erstes Ausführungsbeispiel eines erfindungsgemäßen Formteils,
- FIG 2: in einer schematischen Querschnittsdarstellung ein zweites Ausführungsbeispiel eines erfindungsgemäßen Formteils,
- FIG 3: in einer schematischen Querschnittsdarstellung ein drittes Ausführungsbeispiel eines erfindungsgemäßen Formteils,
- FIG 4: in einer schematischen Querschnittsdarstellung ein viertes Ausführungsbeispiel eines erfindungsgemäßen Formteils,
- FIG 5: in einer schematischen Querschnittsdarstellung ein fünftes Ausführungsbeispiel eines erfindungsgemäßen Formteils, und
- FIG 6: in einer schematischen Querschnittsdarstellung ein sechstes Ausführungsbeispiel eines erfindungsgemäßen Formteils.

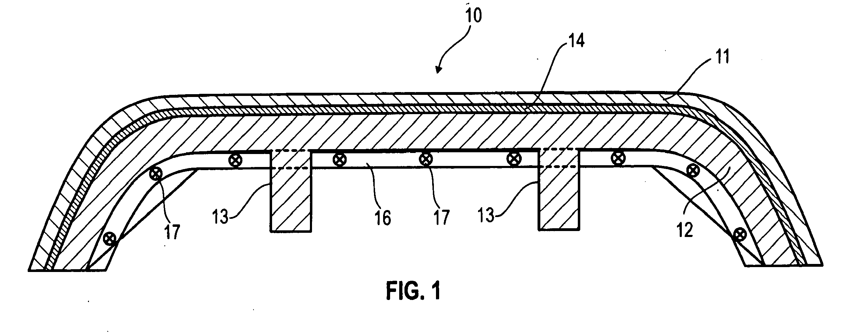

FIG 1 bis FIG 6 zeigen jeweils in einer schematischen Querschnittsdarstellung verschiedene Ausführungsbeispiele eines erfindungsgemäßen Formteils 10. Einander entsprechende Teile und Komponenten sind in den Figuren mit den gleichen Bezugszeichen versehen.

Das Formteil 10 umfasst jeweils eine Dekorschicht 11 an der in einem eingebauten Zustand als Sichtseite vorgesehenen Seite des Formteils 10 und einen Träger 12 aus Kunststoff oder Hartschaum, der Befestigungselemente 13 ausbildet, über die das Formteil 10 in einem Fahrzeuginnenraum als Dekor- bzw. Verkleidungsteil angebracht werden kann.

Im ersten Ausführungsbeispiel des Formteils 10 gemäß FIG 1 ist zwischen Dekorschicht 11 und Träger 12 eine Lumineszenzschicht 14 vorgesehen, die aus lumineszierendem Material besteht bzw. dieses umfasst. An der der Lumineszenzschicht 14 gegenüberliegenden Seite des Trägers 12 ist ein UV-LED-Strip 16 mit UV-LEDs 17 als Anregungsquelle angeordnet.

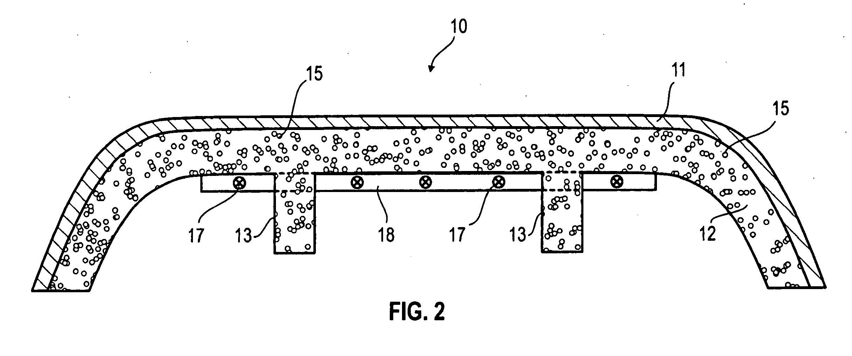

Im zweiten Ausführungsbeispiel des Formteils 10 gemäß FIG 2 ist lumineszierendes Material 15 in den Träger 12 eingebaut bzw. integriert. An der der Dekorschicht 11 gegenüberliegenden Seite des Trägers 12 ist eine UV-LED-Platine 18 mit UV-LEDs 17 als Anregungsquelle angeordnet.

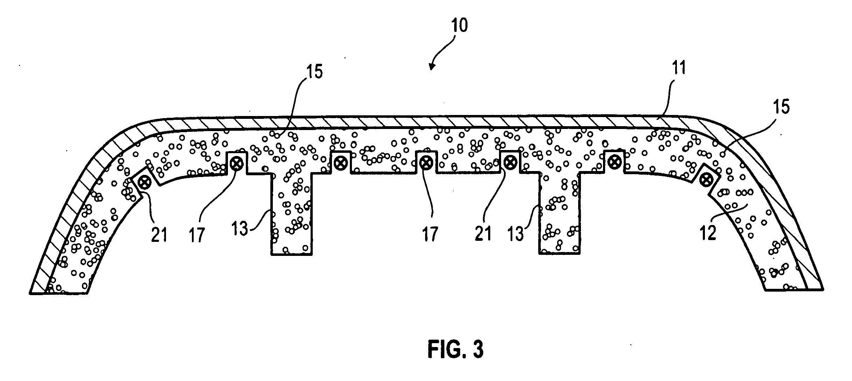

Im dritten Ausführungsbeispiel des Formteils 10 gemäß FIG 3 ist wiederum lumineszierendes Material 15 in den Träger 12 eingebaut bzw. integriert. An der der Dekorschicht 11 gegenüberliegenden Seite des Trägers 12 sind Ausnehmungen 21 im Träger 12 ausgebildet, in denen UV-LEDs 17 als Anregungsquelle angeordnet sind. Die mechanische Befestigung sowie die elektrische Ansteuerung der UV-LEDs 17 ist nicht dargestellt.

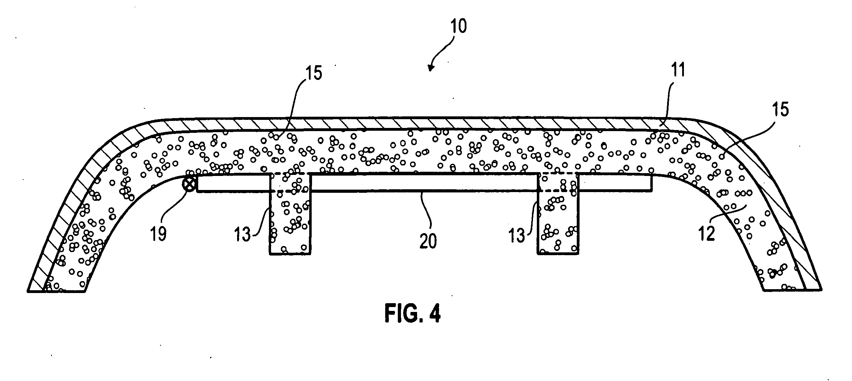

Im vierten Ausführungsbeispiel des Formteils 10 gemäß FIG 4 ist wiederum lumineszierendes Material 15 in den Träger 12 eingebaut bzw. integriert. An der der Dekorschicht 11 gegenüberliegenden Seite des Trägers 12 ist ein Lichtleiter 20 als Anregungsquelle angeordnet. An einem Ende des Lichtleiters 20 ist eine UV-Lichtquelle 19 als eigentliche Quelle der anregenden UV-Wellen und als Anregungsquelle angeordnet. Die UV-Strahlung der UV-Lichtquelle 19 wird vom Lichtleiter 20 verteilt.

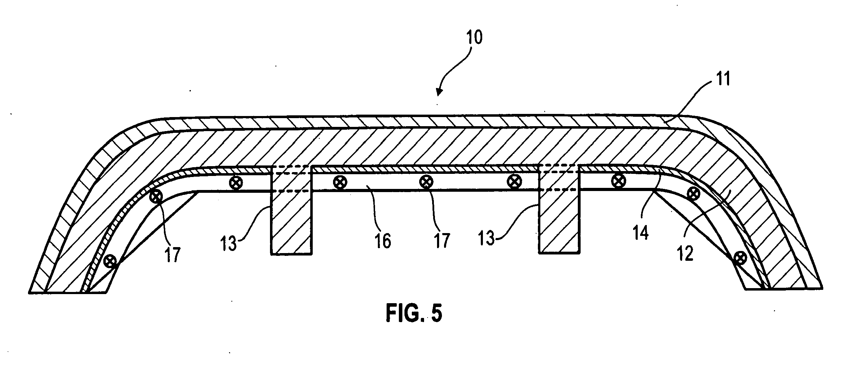

Im fünften Ausführungsbeispiel des Formteils 10 gemäß FIG 5 ist direkt auf der der Dekorschicht 11 abgewandten Seite des Träger 12 eine Lumineszenzschicht 14 vorgesehen, die aus lumineszierendem Material besteht bzw. dieses umfasst. Auf die Lumineszenzschicht 14 folgt direkt ein UV-LED-Strip 16 mit UV-LEDs 17 als Anregungsquellen.

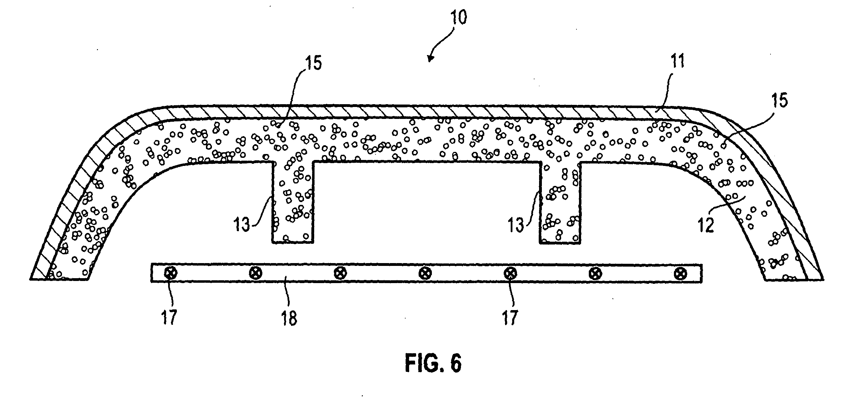

Im sechsten Ausführungsbeispiel des Formteils 10 gemäß FIG 6 ist lumineszierendes Material 15 wie im Beispiel nach FIG 2 in den Träger 12 eingebaut bzw. integriert. Eine UV-LED-Platine 18 mit UV-LEDs 17 als Anregungsquellen ist wiederum an der der Dekorschicht 11 gegenüberliegenden Seite des Trägers 12 angeordnet, im Unterschied zu FIG 2, bei der die UV-LED-Platine 18 direkt an dem Träger 12 anliegt, ist die UV-LED-Platine 18 im Beispiel nach FIG 6 jedoch vom Träger 12 beabstandet, d.h. die Anregungsquellen sind mit Abstand zum Träger 12 angeordnet. Die Darstellung ist hierbei rein schematisch, nicht dargestellt sind beispielsweise geeignete Halteeinrichtungen zur Befestigung der UV-LED-Platine 18 am restlichen Formteil 10.

### Bezugszeichenliste

- 10: Formteil
- 11: Dekorschicht
- 12: Träger
- 13: Befestigungselement
- 14: Lumineszenzschicht
- 15: in den Träger 12 integriertes bzw. eingebautes lumineszierendes Material
- 16: UV-LED-Strip
- 17: UV-LED, Anregungsquelle
- 18: UV-LED-Platine
- 19: UV-Lichtquelle, Anregungsquelle
- 20: Lichtleiter
- 21: Ausnehmungen

## Patentansprüche

1. Formteil (10), ausgebildet als Verkleidungsteil für einen Fahrzeuginnenraum,
umfassend eine Dekorschicht (11) und mindestens einen Träger (12), und
umfassend mindestens eine Anregungsquelle (17, 19, 20) zur Aussendung elektromagnetischer Wellen und mindestens ein lumineszierendes Material (14, 15), das durch die von der oder den Anregungsquellen (17, 19, 20) ausgehenden elektromagnetischen Wellen zur Aussendung von Licht im sichtbaren Bereich anregbar oder angeregt ist,
**dadurch gekennzeichnet, dass**
am oder im Träger (12) zusätzlich Farbstoffe vorgesehen sind, die dem vom lumineszierenden Material (15) ausgesandten oder auszusendenden Licht im sichtbaren Bereich einen bestimmten Farbton geben.

2. Formteil nach Anspruch 1,
**dadurch gekennzeichnet, dass**
die Farbstoffe in den Träger (12) eingebaut oder integriert sind.

3. Formteil nach Anspruch 1 oder 2,
**dadurch gekennzeichnet, dass**
die Farbstoffe mit dem den Träger (12) bildenden Material vermischt oder vermengt sind.

4. Formteil nach einem der vorhergehenden Ansprüche,
**dadurch gekennzeichnet, dass**
die von der Anregungsquelle (17, 19, 20) ausgehenden elektromagnetischen Wellen eine Strahlung im nichtsichtbaren Bereich sind.

5. Formteil nach einem der vorhergehenden Ansprüche,
**dadurch gekennzeichnet, dass**
die Anregungsquelle (17, 19, 20) eine UV-Lichtquelle (17, 29) ist oder umfasst.

6. Formteil nach einem der vorhergehenden Ansprüche,
**dadurch gekennzeichnet, dass**
das lumineszierende Material in den Träger (12) integriert oder eingebaut (15) ist.

7. Formteil nach einem der vorhergehenden Ansprüche,
**dadurch gekennzeichnet, dass**
das lumineszierende Material mit dem den Träger (12) bildenden Material vermischt oder vermengt ist.

8. Formteil nach einem der vorhergehenden Ansprüche,
**dadurch gekennzeichnet, dass**
der Träger (12) ganz oder abschnittsweise für die von der Anregungsquelle (17, 19, 20) ausgehenden anregenden Wellen und das vom lumineszierenden Material (14, 15) ausgesandte oder auszusendende Licht zumindest teilweise transparent oder durchscheinend ausgebildet ist.

9. Formteil nach Anspruch 8,
**dadurch gekennzeichnet, dass**
der Träger (12) ein für die von der Anregungsquelle (17, 19, 20) ausgehende anregende Wellen und das vom lumineszierenden Material (14, 15) ausgesandte oder auszusendende Licht zumindest teilweise transparenter oder durchscheinender Kunststoff ist oder einen derartigen Kunststoff umfasst.

10. Formteil nach einem der vorhergehenden Ansprüche,
**dadurch gekennzeichnet, dass**
die Anregungsquelle (17, 19) elektrisch mit einer Steuereinrichtung zur elektrischen Ansteuerung der Anregungsquelle verbunden ist.

11. Formteil nach einem der vorhergehenden Ansprüche,
**dadurch gekennzeichnet, dass**
die Anregungsquelle (17, 19) über das Bordnetz des Fahrzeugs an die Spannungsquelle des Fahrzeugs angeschlossen ist.

## Claims

1. Moulded part (10), designed as a trim part for a vehicle interior,
comprising a decorative layer (11) and at least one substrate (12), and
comprising at least one excitation source (17, 19, 20) for emitting electromagnetic waves and at least one luminescent material (14, 15), which is excitable or excited by the electromagnetic waves emanating from the excitation source(s) (17, 19, 20) for emitting light in the visible range,
**characterized in that**
provided on or in the substrate (12) are additional dyes, which give the light emitted or to be emitted by the luminescent material (15) a specific colour in the visible range.

2. Moulded part according to claim 1,
**characterized in that**
the dyes are incorporated or integrated in the substrate (12).

3. Moulded part according to claim 1 or 2,
**characterised in that**
the dyes are mixed or blended with the material forming the substrate (12).

4. Moulded part according to one of the preceding claims,
**characterized in that**
the electromagnetic waves emanating from the excitation source (17, 19, 20) are radiation in the non-visible range.

5. Moulded part according to one of the preceding claims,
**characterized in that**
the excitation source (17, 19, 20) is or comprises a UV light source (17, 19).

6. Moulded part according to one of the preceding claims,
**characterized in that**
the luminescent material is integrated or incorporated (15) in the substrate (12).

7. Moulded part according to one of the preceding claims,
**characterized in that**
the luminescent material is mixed or blended with the material forming the substrate (12).

8. Moulded part according to one of the preceding claims,
**characterized in that**
the substrate (12) is designed to be at least partially transparent or translucent either wholly or in sections for the excitatory waves emanating from the excitation source (17, 19, 20) and for the light emitted or to be emitted by the luminescent material (14, 15).

9. Moulded part according to claim 8,
**characterized in that**
the substrate (12) is a plastic at least partially transparent or translucent for the excitatory waves emanating from the excitation source (17, 19, 20) and the light emitted or to be emitted by the luminescent material (14, 15) is or includes such a plastic.

10. Moulded part according to one of the preceding claims,
**characterized in that**
the excitation source (17, 19) is electrically connected to a control device for electrical activation of the excitation source.

11. Moulded part according to one of the preceding claims,
**characterized in that**
the excitation source (17, 19) is connected to the vehicle's voltage source via the vehicle power supply.

## Revendications

1. Pièce moulée (10), en forme de pièce de revêtement de l'habitacle d'un véhicule,
comprenant une couche de décoration (11) et au moins un support (12) et
comprenant au moins une source d'excitation (17, 19, 20) pour l'émission d'ondes électromagnétiques et au moins un matériau luminescent (14, 15) qui peut être excité ou est excité par les ondes électromagnétiques partant de la ou des sources d'excitation (17, 19, 20) pour l'émission de la lumière dans le spectre visible,
**caractérisée en ce que** sont prévus à ou dans le support (12) additionnellement des colorants qui confèrent à la lumière émise ou à émettre par le matériau luminescent (15) dans le spectre visible une nuance de couleur déterminée.

2. Pièce moulée selon la revendication 1, **caractérisée en ce que** les colorants sont montés ou intégrés dans le support (12).

3. Pièce moulée selon la revendication 1 ou 2, **caractérisée en ce que** les colorants sont mélangés ou malaxés avec le matériau formant le support (12).

4. Pièce moulée selon l'une des revendications précédentes, **caractérisée en ce que** les ondes électromagnétiques émises par la source d'excitation (17, 19, 20) constituent un rayonnement dans le spectre non visible.

5. Pièce moulée selon l'une des revendications précédentes, **caractérisée en ce que** la source d'excitation (17, 19, 20) est une source de lumière UV (17, 29) ou comprend celle-ci.

6. Pièce moulée selon l'une des revendications précédentes, **caractérisée en ce que** le matériau luminescent est intégré ou monté (15) dans le support (12).

7. Pièce moulée selon l'une des revendications précédentes, **caractérisée en ce que** le matériau luminescent est mélangé ou malaxé avec le matériau formant le support (12).

8. Pièce moulée selon l'une des revendications précédentes, **caractérisée en ce que** le support (12) est réalisé au moins partiellement transparent ou translucide, en totalité ou par sections pour les ondes d'excitation partant de la source d'excitation (17, 19, 20) et la lumière émise ou à émettre par le matériau luminescent (14, 15).

9. Pièce moulée selon la revendication 8, **caractérisée en ce que** le support (12) est un matériau synthétique au moins partiellement transparent ou translucide ou comprend un tel matériau synthétique pour les ondes d'excitation partant de la source d'excitation (17, 19, 20) et la lumière émise ou à émettre par le matériau luminescent (14, 15).

10. Pièce moulée selon l'une des revendications précédentes, **caractérisée en ce que** la source d'excitation (17, 19) est reliée électriquement à une installation de commande, pour la commande électrique de la source d'excitation.

11. Pièce moulée selon l'une des revendications précédentes, **caractérisée en ce que** la source d'excitation (17, 19) est connectée par le réseau de bord du véhicule à la source de tension du véhicule.
